# FASCICULE DE BREVET EUROPEEN

(11) **EP 3 280 783 B1**
(45) Date de publication et mention de la délivrance du brevet: **12.08.2026**
(21) Numéro de dépôt: 16718222.9
(22) Date de dépôt: 07.04.2016
(51) Int. Cl.: C10G 75/04, C08L 95/00, C08G 8/28, C09K 8/524, C08G 14/06, C08L 61/34

(54) **ADDITIF DISPERSANT DES ASPHALTENES ET SES UTILISATIONS**
ASPHALTENDISPERSIONSADDITIV UND VERWENDUNGEN DAVON
ASPHALTENE DISPERSANT ADDITIVE AND USES THEREOF

(30) Priorité: 10.04.2015 FR 1553102
(43) Date de publication de la demande: 14.02.2018
(73) Titulaire: TotalEnergies OneTech, 92400 Courbevoie (FR)
(72) Inventeur: TORT, Frédéric, 69530 Brignais (FR); PASSADE-BOUPAT, Nicolas, 64320 Idron (FR); RONDON, Marianna, 64000 Pau (FR); QUINTERO, Carlos, 64000 Pau (FR)
(74) Mandataire: Casalonga
(86) Numéro de dépôt international: PCT/EP2016/057553
(87) Numéro de publication internationale: WO 2016/162392

(56) Documents cités:
- WO-A2-2009/046461
- US-A- 4 789 402
- US-A- 5 494 607
- US-A1- 2013 255 139
- US-A1- 2013 310 492
- US-A1- 2014 115 953

## Description

### Domaine technique

La présente invention concerne l'utilisation d'une résine alkylphénol-aldéhyde modifiée dans une composition d'huiles brutes ou dans un produit dérivé d'une composition d'huiles brutes, comme additif dispersant des aphaltènes. Elle concerne également un procédé de traitement d'une composition d'huiles brutes ou d'un produit dérivé, qui permet de prévenir la précipitation des asphaltènes, en particulier dans les huiles brutes et les produits qui en sont issus par des procédés de raffinage et/ou d'extraction.

L'invention concerne notamment l'additivation d'un liant bitumineux par une résine alkylphénol-aldéhyde modifiée, qui permet de diminuer les températures de fabrication, de mise en œuvre, de compactage des enrobés et de diminuer les températures de fabrication et de mise en œuvre des asphaltes. L'invention concerne un procédé de préparation d'enrobés et d'asphaltes à basse température, ainsi que les enrobés et les asphaltes obtenus à partir dudit procédé. L'invention concerne aussi les compositions bitumineuses additivées à l'aide d'une résine alkylphénol-aldéhyde modifiée.

L'invention concerne enfin l'utilisation de ces liants bitumineux, enrobés ou asphaltes pour la fabrication de revêtements.

### Etat de la technique antérieure

Une huile brute comprend principalement deux classes de produits : les maltènes et les asphaltènes, les maltènes ayant pour principaux constituants : les huiles (des composés hydrocarbonés saturés et des aromatiques) et les résines. Les asphaltènes comprennent des espèces très polaires qui ont tendance à s'associer pour former des agglomérats. Ils constituent le composant le plus lourd des bruts pétroliers. Les asphaltènes sont composés de molécules comportant des fragments polycycliques, polyaromatiques, de courtes chaînes aliphatiques, des hétéroatomes tels que N, O, S et des métaux (par exemple Ni, V, Fe). Ils sont insolubles dans les alcanes comme le n-pentane ou le n-heptane, mais ils sont solubles dans les solvants aromatiques comme le toluène ou le xylène. L'interaction des asphaltènes avec leur environnement est un phénomène complexe, difficile à contrôler.

La précipitation des asphaltènes peut survenir dans les puits de production, dans les pipelines et dans les installations de surface. Les asphaltènes présents dans les huiles brutes ou dans les résidus lourds, issus des opérations de raffinage, peuvent précipiter et entrainer des problèmes de colmatage de filtres ou de bouchage de canalisations. Ce phénomène entraine une perte de productivité et une réduction des flux de transport. Sans traitement permettant d'éviter ce phénomène, il est nécessaire de démonter les installations de raffinage et de transport de bruts et la fréquence des opérations de maintenance des sites de production et des installations de transport représente une charge économique importante.

Les principaux facteurs qui favorisent la précipitation des asphaltènes sont : une élévation de pression, une élévation de température, des variations de composition, notamment en raison d'une injection de matière dans le brut ou dans le produit dérivé, par exemple l'arrivée d'une boue de forage dans le réservoir, un mélange de bruts ou une injection de gaz ou d'un autre fluide.

La composition du brut ou du produit dérivé influe également sur le phénomène de précipitation des asphaltènes : les huiles légères, présentant une faible teneur en asphaltènes, sont riches en alcanes dans lesquels les asphaltènes sont peu solubles, et ceux-ci ont tendance à précipiter dans ce milieu. Les huiles lourdes, riches en asphaltènes, comprennent des quantités élevées de composés intermédiaires, tels que des résines, qui sont de bons solvants des asphaltènes, et retardent ou préviennent leur précipitation. Toutefois, dans les bruts, la précipitation des asphaltènes entraine souvent la co-précipitation d'autres composants tels que des résines ou des cires.

Dans les formations souterraines, l'injection de fluides et l'application de pressions élevées entrainent l'adsorption de résidus sur la roche et une chute de la perméabilité qui peuvent provoquer un blocage du réservoir. Au cours des opérations de raffinage, l'élévation de température appliquée aux bruts provoque des problèmes de cokéfaction et d'encrassement dans les colonnes de distillation et sur les échangeurs de chaleur, ainsi qu'une désactivation des catalyseurs. Lors du transport des produits pétroliers (bruts et raffinés), la pression appliquée au fluide peut entrainer l'obturation des canalisations. Ces phénomènes sont en large part attribuables à la précipitation des asphaltènes. Les pertes de production et les opérations de remédiation qui en résultent représentent des coûts importants.

Le problème que l'invention se propose de résoudre est de fournir un nouvel additif qui soit efficace pour disperser les asphaltènes responsables des difficultés d'exploitation décrites ci-dessus, sur les sites de production et dans les installations de transport et de raffinage des bruts ou des résidus lourds.

Des additifs sont connus et utilisés aujourd'hui pour limiter la précipitation des asphaltènes. En particulier les résines alkylphénols non greffées ont été décrites pour cette utilisation dans l'article Energy & Fuels 2009, 23, 1575-1582, et dans le brevet US-5,021,498. Des résines alkylphénols polyéthylènepolyamine-formaldéhyde ont été décrites dans le brevet US-5,494,607 pour la même application.

L'efficacité des additifs existants est fonction de la qualité des huiles et de la structure chimique des asphaltènes. Ces additifs sont spécifiques du type d'huile à traiter et ne sont pas efficaces sur une large palette de bruts et de produits dérivés. Par ailleurs, en fonction de la qualité des huiles, leur efficacité est limitée. Notamment, les bruts peuvent être plus ou moins difficiles à traiter en fonction de leur teneur en asphaltènes. Certains additifs sont inefficaces ou doivent être mis en œuvre avec un taux de traitement trop élevé ce qui représente un intérêt économique faible ou nul.

Les résines alkylphénol-aldéhyde modifiées, obtenues par réaction de Mannich d'une résine de condensation alkylphénol-aldéhyde avec au moins un aldéhyde et au moins un composé hydrocarboné ayant au moins un groupement alkylamine, sont connues pour leur utilisation dans les compositions de carburant : comme additifs anti-sédimentation WASA (WO2012/085865), pour la tenue aux basses températures (WO2013/189868) et comme agent antioxydant (WO2014/173844). Dans les documents WO2012/085865 et WO2013/189868, l'effet technique décrit consiste à empêcher la formation et la précipitation, ou la sédimentation, de cristaux de paraffines, en particulier aux basses températures. Le document WO2014/173844 enseigne que ces composés préviennent l'oxydation de molécules instables sensibles à l'oxydation qui sont principalement des molécules contenant des insaturations comme par exemple les oléfines dans les essences, les esters méthyliques ou éthyliques d'acides gras (EMAG et EEAG), les esters de graisses animales ou autres sources de triglycérides dans les Biodiesels ou encore les oléfines et les aromatiques partiellement hydrogénés dans les coupes de distillats issues du craquage catalytique ou thermique des produits issus du raffinage du pétrole. Toutefois, ces applications concernent la stabilisation de molécules (paraffines, esters gras, oléfines) dont la structure est très différente de celle des asphaltènes et qui précipitent sous l'effet de facteurs physico-chimiques très différents, voire opposés, de ceux qui provoquent la précipitation des asphaltènes.

En particulier, dans le cas des paraffines, la précipitation est observée aux basses températures, tandis que celle des asphaltènes est observée aux températures élevées. En outre, les additifs présentant une efficacité remarquable comme dispersants des paraffines, tels que les polyacrylates et les polyisobutylènes d'anhydride succinique, présentent une efficacité limitée comme dispersants d'asphaltènes, en particulier lorsqu'ils sont utilisés dans des huiles brutes ou dans des produits dérivés.

Le document US 2013/031092 décrit des additifs destinés à améliorer les propriétés physiques des bitumes. Ces additifs comprennent un premier composant choisi parmi les résines phénol-aldéhyde (alcoxylées) - (di ou tri-alkyl) - (aminées) ou un copolymère alpha oléfine/anhydride maléique et un second composant choisi parmi les polyamines, les amidoamines, les imidazolines, les deux composés agissant de façon synergique. Ainsi, aucun des documents de l'art antérieur ne mentionne ni ne suggère que les résines alkylphénol-aldéhyde modifiées, susceptibles d'être obtenues par réaction de Mannich d'une résine de condensation alkylphénol-aldéhyde avec au moins un aldéhyde et au moins un composé hydrocarboné ayant au moins un groupement alkylamine, sont capables d'améliorer la dispersion et de prévenir la précipitation des asphaltènes.

Le document US 2013/310492 A1 divulgue un procédé permettant l'amélioration de la stabilité d'un asphaltène par ajout d'un additif comprenant une résine de (alkoxy)-(di ou tri)-(amino) phénol-aldéhyde.

L'additivation de compositions de liant bitumineux, d'enrobés ou de compositions d'asphaltes par des additifs dispersants est connue de l'art antérieur.

La préparation des enrobés à chaud ou des asphaltes comprend plusieurs étapes. La première étape consiste à mélanger le liant bitumineux avec des granulats (pour les enrobés) ou avec des charges (pour les asphaltes) à une température dite de fabrication ou température d'enrobage. Le mélange liant bitumineux/granulats ou le mélange liant bitumineux/charges est ensuite répandu (pour les enrobés) ou coulé (pour les asphaltes) à une température dite de mise en œuvre. Pour les enrobés bitumineux, il existe ensuite une étape de compactage à une température dite de compactage. Après le compactage de l'enrobé bitumineux ou le coulage de l'asphalte, l'enrobé bitumineux ou l'asphalte sont refroidis à température ambiante.

Les différentes températures mises en œuvre dans la préparation des enrobés et des asphaltes traditionnels sont très élevées. Ainsi, pour les enrobés bitumineux, les températures de fabrication (ou température d'enrobage) et de mise en œuvre sont comprises entre 160°C et 180°C, la température de compactage est comprise entre 120°C et 150°C. Pour les asphaltes ces températures sont encore supérieures, les températures de fabrication (ou température d'enrobage) et de mise en œuvre sont comprises entre 200°C et 250°C.

Ces températures relativement élevées, induisent de fortes dépenses énergétiques, des émissions de gaz à effet de serre et de composés organiques volatils et rendent les conditions de travail difficiles à cause du rayonnement et des émissions gazeuses.

Des techniques dites « à froid » ont été proposées. Ces techniques reposent sur l'utilisation d'émulsions de bitume, dispersions de bitume dans de l'eau. Mais les performances mécaniques obtenues via ces techniques dites « à froid » sont en général en retrait, comparées aux techniques dites « à chaud ».

Une autre voie pour abaisser les températures de préparation des enrobés à chaud et des asphaltes, repose sur des techniques intermédiaires dites « tièdes », basées sur l'additivation du liant bitumineux. Diverses solutions, basées sur l'additivation du liant bitumineux ont déjà été proposées :
- des cires d'hydrocarbures ayant un point de fusion supérieur à 85°C (EP0690102),
- une combinaison d'une cire d'hydrocarbure dont le point de fusion est supérieur à 85°C et d'une cire d'ester d'acides gras, d'origine synthétique, végétale, ou végétale fossile et ayant un point de fusion inférieur à 85°C (WO2004108830),
- une combinaison d'un composé macromoléculaire choisi parmi les résines naturelles d'origine végétale ou les cires d'hydrocarbures, avec un dérivé d'acides gras choisi dans le groupe constitué par les diesters d'acides gras et les éthers d'acides gras (WO2007135097),
- un triglycéride d'acides gras (EP2192158),
- une combinaison d'additifs comprenant un agent surfactant et modificateur de rhéologie comprenant une cire et une résine (WO2009062925),
- au moins 10% en poids de glycérol (EP2062941) dans un liant bitumineux.

Toutefois, il subsiste le besoin de composés alternatifs aux additifs existants actuellement, permettant de diminuer les températures de fabrication, de mise en œuvre et de compactage des enrobés et les températures de fabrication et de mise en œuvre des asphaltes.

L'invention repose sur le fait qu'en faisant intervenir un liant bitumineux additivé par au moins une résine alkylphénol aldéhyde modifiée, la préparation d'enrobés ou d'asphaltes pouvait être réalisée à de plus basses températures.

### Résumé de l'invention

L'invention a pour premier objet l'utilisation d'au moins une résine alkylphénol-aldéhyde modifiée dans une composition d'huiles brutes ou dans un produit dérivé d'une composition d'huiles brutes et comprenant des asphaltènes, pour disperser les asphaltènes et/ou pour prévenir et/ou retarder et/ou empêcher et/ou réduire la précipitation des asphaltènes, ladite résine alkylphénol-aldéhyde modifiée étant susceptible d'être obtenue par réaction de Mannich d'une résine de condensation alkylphénol-aldéhyde
- avec au moins un aldéhyde et/ou une cétone ayant de 1 à 8 atomes de carbone, de préférence de 1 à 4 atomes de carbone;
- et au moins un composé hydrocarboné ayant au moins un groupement alkylamine, ayant entre 1 et 30 atomes de carbone, de préférence entre 4 et 30 atomes de carbone,
   ladite résine de condensation alkylphénol-aldéhyde étant elle-même susceptible d'être obtenue par condensation
- d'au moins un alkylphénol substitué par au moins un groupement alkyle, linéaire ou ramifié, ayant de 1 à 30 atomes de carbone, de préférence un monoalkylphénol,
- avec au moins un aldéhyde et/ou une cétone ayant de 1 à 8 atomes de carbone, de préférence de 1 à 4 atomes de carbone.

L'invention a encore pour objet l'utilisation d'une résine alkylphénol-aldéhyde modifiée telle que définie ci-dessus dans une composition d'huiles brutes ou dans un produit dérivé d'une composition d'huiles brutes, comme additif dispersant des aphaltènes.

L'invention a encore pour objet une composition comprenant des asphaltènes, choisie parmi : les compositions de bitume, les liants bitumineux, les enrobés bitumineux et les asphaltes, ladite composition comprenant au moins une résine alkylphénol-aldéhyde modifiée telle que définie ci-dessus.

L'invention a encore pour objet un procédé de traitement d'une composition d'huiles brutes ou d'un produit dérivé d'une composition d'huiles brutes et comprenant des asphaltènes, ce procédé comprenant au moins :
(i) l'introduction d'au moins une résine alkylphénol-aldéhyde modifiée telle que définie ci-dessus dans la composition d'huiles brutes ou dans le produit dérivé d'une composition d'huiles brutes et comprenant des asphaltènes,
(ii) une étape de traitement choisie parmi : une élévation de pression, une élévation de température, un mélange avec au moins un autre fluide,

Selon un mode de réalisation préféré de l'invention, celle-ci est mise en œuvre dans une composition d'huiles brutes ou dans un produit dérivé d'une composition d'huiles brutes et comprenant des asphaltènes soumis à une ou plusieurs des conditions suivantes :
- une élévation de pression,
- une élévation de température,
- un mélange avec au moins un autre fluide.

Selon un mode de réalisation préféré de l'invention, la résine alkylphénol-aldéhyde modifiée est susceptible d'être obtenue à partir de p-nonylphénol, de formaldéhyde et d'au moins un composé hydrocarboné ayant au moins un groupement alkylmonoamine ou alkylpolyamine.

Selon un mode de réalisation préféré de l'invention, la résine alkylphénol-aldéhyde modifiée est obtenue à partir d'au moins une alkylmonoamine ou d'au moins une alkylpolyamine ayant au moins un groupement amine primaire.

Avantageusement, selon ce mode de réalisation, la résine alkylphénol-aldéhyde modifiée est obtenue à partir d'au moins une alkylmonoamine ou d'au moins une alkylpolyamine dont tous les groupements amine sont des amines primaires.

Selon une première variante préférée de l'invention, l'alkylamine est une alkylmonoamine à chaîne grasse ayant de 12 à 24 atomes de carbone, de préférence de 12 à 22 atomes de carbone.

Selon une autre variante préférée de l'invention, l'alkylamine est une alkylpolyamine à chaîne grasse ayant de 12 à 24 atomes de carbone, de préférence de 12 à 22 atomes de carbone.

Selon un mode de réalisation préféré de l'invention, la résine alkylphénol-aldéhyde modifiée est mise en œuvre sous forme diluée dans un solvant, de préférence dans un solvant aromatique, ou dans une huile.

Selon un mode de réalisation préféré de l'invention, la résine alkylphénol-aldéhyde modifiée est mise en œuvre dans une composition d'huiles brutes ou dans une fraction hydrocarbonée d'huiles brutes comprenant des asphaltènes.

Selon un mode de réalisation préféré, l'invention est mise en œuvre dans un équipement choisi parmi : un réservoir, une installation de raffinage, un pipeline, un puits de forage, une cuve de stockage, un équipement de transport, un filtre.

Selon un mode de réalisation préféré de l'invention, la résine alkylphénol-aldéhyde modifiée est mise en œuvre dans un produit dérivé d'une composition d'huiles brutes choisi parmi : les liants bitumineux, les enrobés bitumineux et les asphaltes.

Selon un mode de réalisation préféré de l'invention, la résine alkylphénol-aldéhyde modifiée est mise en œuvre pour diminuer la température de préparation et/ou la température de mise en œuvre du liant bitumineux, et/ou pour diminuer les températures de fabrication, de mise en œuvre et/ou de compactage lors de la préparation d'un enrobé bitumineux, et/ou pour diminuer les températures de fabrication et/ou de mise en œuvre lors de la préparation d'un asphalte.

Selon un mode de réalisation préféré, la composition est un liant bitumineux comprenant de 0,1 à 5% en masse de résine alkylphénol aldéhyde modifiée, par rapport à la masse totale de liant.

Selon un mode de réalisation préféré, la composition est un enrobé bitumineux comprenant de 1 à 10 % en masse de liant bitumineux et de 90 à 99% en masse de granulats, par rapport à la masse totale de l'enrobé.

Selon un mode de réalisation préféré, la composition est un asphalte comprenant de 1 à 20 % en masse de liant bitumineux et de 80 à 99% de charges, par rapport à la masse totale de l'asphalte.

Selon un mode de réalisation préféré, la composition choisie parmi les liants bitumineux, les enrobés et les asphaltes est mise en œuvre pour la fabrication de revêtements de routes, de chaussées, de trottoirs, de voiries, d'aménagements urbains, de sols, d'étanchéité de bâtiments ou d'ouvrages, en particulier pour la fabrication en application routière, de couches de fondation, de couches de base, de couches d'assise, de couches de surface telles que les couches de liaison et/ou les couches de roulement.

Selon un mode de réalisation préféré du procédé de l'invention, les étapes (i) et (ii) sont mises en œuvre de façon successive.

Selon un mode de réalisation préféré du procédé de l'invention, l'étape (ii) est choisie parmi : une extraction d'une huile brute d'un réservoir, une étape de raffinage d'une huile brute ou d'un produit dérivé, un transport d'une huile brute ou d'un produit dérivé, une filtration d'une huile brute ou d'un produit dérivé, une injection de gaz dans une huile brute ou dans un produit dérivé, un mélange d'huiles brutes ou de produits dérivés, un mélange d'une huile brute ou d'un produit dérivé avec un solvant.

Selon un mode de réalisation préféré le procédé de l'invention est mis en œuvre dans un équipement choisi parmi : un réservoir, un puits de forage, une installation de raffinage, un pipeline, une cuve de stockage, un équipement de transport, un filtre.

Selon un mode de réalisation préféré, le procédé de l'invention est mis en œuvre pour la préparation d'un liant bitumineux, et comprend une étape (ii) de mélange du bitume et de la résine alkylphénol aldéhyde modifiée dans laquelle la température à laquelle est réalisé ce mélange est comprise entre 100°C et 170°C.

Selon un mode de réalisation préféré, le procédé de l'invention est mis en œuvre pour la préparation d'un enrobé, et comprend une étape (ii) d'enrobage du liant bitumineux et des granulats, la température d'enrobage étant comprise entre 100°C et 150°C.

Selon un mode de réalisation préféré, le procédé de l'invention est mis en œuvre pour la préparation d'un asphalte, et comprend une étape (ii) de mélange du liant bitumineux et des charges, la température de mélange étant comprise entre 140°C et 180°C.

Ces additifs, de type résine alkylphénol-aldéhyde modifiée de l'invention ont pour fonction de maintenir les asphaltènes dispersés dans la matrice hydrocarbonée et évitent ou retardent les phénomènes d'agglomération et précipitation des asphaltènes.

Au contraire de certains additifs de l'art antérieur de type résine phénol aldéhyde modifiée obtenus par un procédé en une seule étape, les résines utilisées dans l'invention ont été obtenues par un procédé en deux étapes, qui permet de contrôler la mase moléculaire de la résine ainsi que le greffage des fonctions amine.

Les additifs de l'invention présentent de nombreux avantages, et en particulier : ils sont plus efficaces que les additifs sur base résines alkylphénol-aldéhydes déjà connus dans le traitement des asphaltènes ; ils sont efficaces sur une grande variété de bruts, de compositions variées ; ils sont efficaces en faible quantité.

Ces additifs permettent de réduire significativement les températures de fabrication, de mise en œuvre et de compactage des procédés de préparation des enrobés et les températures de fabrication et de mise en œuvre des procédés de préparation des asphaltes. Le procédé de préparation selon l'invention est un procédé de type anhydre ne faisant pas intervenir d'apport d'eau extérieur, seule l'additivation du liant permet de réduire les températures de fabrication.

Les additifs de l'invention sont peu coûteux à mettre en œuvre car, plus efficaces, ils sont ajoutés en petites quantités et sont donc plus économiques.

Les additifs de l'invention permettent la préparation d'enrobés et d'asphaltes coulés à plus basses températures, les propriétés du liant additivé étant pas ou peu modifiées par rapport au bitume de base non additivé.

Le procédé de préparation d'enrobés et d'asphaltes coulés à plus basses températures, permet d'assurer une bonne adhésivité entre le liant bitumineux additivé et les granulats et permet d'obtenir un enrobé présentant une bonne résistance au désenrobage, une bonne résistance à l'orniérage, un bon module de rigidité.

Il permet d'obtenir un asphalte fabriqué à plus basse température, ayant les valeurs d'indentation et de retrait requises.

Le procédé de préparation d'enrobés et d'asphaltes coulés à plus basses températures selon l'invention est un procédé anhydre.

### Description détaillée

### La résine alkylphénol-aldéhyde modifiée :

La résine alkylphénol-aldéhyde modifiée est susceptible d'être obtenue par réaction de Mannich d'une résine de condensation alkylphénol-aldéhyde
- avec au moins un aldéhyde et/ou une cétone ayant de 1 à 8 atomes de carbone, de préférence de 1 à 4 atomes de carbone ;
- et au moins un composé hydrocarboné ayant au moins un groupement alkylmonoamine ou alkylpolyamine (alkylamine), ayant entre 1 et 30 atomes de carbone, de préférence entre 4 et 30 atomes de carbone,
ladite résine de condensation alkylphénol-aldéhyde étant elle-même susceptible d'être obtenue par condensation
- d'au moins un alkylphénol substitué par au moins un groupement alkyle, linéaire ou ramifié, ayant de 1 à 30 atomes de carbonc, de préférence un monoalkylphénol,
- avec au moins un aldéhyde et/ou une cétone ayant de 1 à 8 atomes de carbone, de préférence de 1 à 4 atomes de carbone.

La résine de condensation alkylphénol-aldéhyde peut être choisie parmi toute résine de ce type déjà connue et notamment, celles décrites dans les documents EP-311542, EP-857776, EP-1584673.

La résine alkylphénol-aldéhyde modifiée selon l'invention est, avantageusement, obtenue à partir d'au moins un alkylphénol substitué en para. On utilise, de préférence, le nonylphénol.

Le nombre moyen de noyaux phénoliques par molécule de résine nonylphénol-aldéhyde est, de préférence, supérieur à 6 et inférieur ou égal à 25 et, plus préférentiellement compris entre 8 et 17, et encore plus préférentiellement entre 9 et 16, noyaux phénoliques par molécule. Le nombre de noyaux phénoliques peut être déterminé par résonance magnétique nucléaire (RMN) ou chromatographie à perméation de gel (GPC).

Avantageusement, la résine alkylphénol-aldéhyde modifiée est obtenue par mise en œuvre d'un même aldéhyde ou d'une même cétone aux deux étapes de sa préparation.

Selon un mode de réalisation préféré, la résine alkylphénol-aldéhyde modifiée peut être obtenue à partir d'au moins un aldéhyde et/ou une cétone choisi parmi le formaldéhyde, l'acétaldéhyde, le propionaldéhyde, le butyraldéhyde, le 2-éthyl-hexanal, le benzaldéhyde, l'acétone. De préférence, la résine alkylphénol-aldéhyde modifiée peut être obtenue à partir d'au moins le formaldéhyde.

Selon un mode de réalisation particulier, la résine alkylphénol-aldéhyde modifiée est obtenue à partir d'au moins une alkylamine ayant au moins un groupement amine primaire et/ou secondaire. En particulier, l'alkylamine est avantageusement choisie parmi les amines primaires ou secondaires substituées par, respectivement, un ou deux groupements alkyles comprenant, de préférence, de 12 à 24 atomes de carbone, plus préférentiellement de 12 à 22 atomes de carbone.

Selon une variante préférée, la résine alkylphénol-aldéhyde modifiée est obtenue à partir d'au moins une alkylamine ayant au moins un groupement amine primaire.

En particulier, la résine alkylphénol-aldéhyde modifiée peut avantageusement être obtenue à partir d'au moins une alkylamine ou d'au moins une alkylpolyamine dont tous les groupements amine sont des amines primaires.

L'alkylamine est, de préférence, une alkylamine ou une alkylpolyamine à chaîne grasse ayant de 12 à 24 atomes de carbone, de préférence de 12 à 22 atomes de carbone.

Selon une autre variante préférée, la résine alkylphénol-aldéhyde modifiée est obtenue à partir d'au moins une alkylamine ou une alkylpolyamine ayant au moins un groupement amine primaire et comprenant une chaîne grasse ayant de 12 à 24 atomes de carbone, de préférence de 12 à 22 atomes de carbone.

Les alkylamines commerciales ne sont en général pas des composés purs mais des mélanges. Parmi les alkylamines commercialisées qui conviennent, on peut notamment citer les alkylamines à chaîne grasse commercialisées sous les dénominations Noram^{®}, Trinoram^{®}, Duomeen^{®}, Dinoram^{®}, Triameen^{®}, Armeen^{®}, Polyram^{®}, Lilamin^{®} et Cemulcat^{®}.

On peut citer à titre d'exemple préféré, la Trinoram ^{®} S qui est une dipropylènetriamine de suif, connue également sous la dénomination N-(Tallowalkyl)dipropylènetriamine.

### Les huiles brutes et les produits dérivés :

L'invention concerne le traitement d'une composition d'huiles brutes ou d'un produit dérivé comprenant des asphaltènes. Les bitumes peuvent représenter un cas particulier de compositions d'huiles brutes, caractérisés par leur viscosité élevée.

Par produit dérivé d'une composition d'huiles brutes on entend aussi bien une fraction issue d'une composition d'huile brute par une méthode de fractionnement, telle que par exemple raffinage, extraction, mais aussi tout produit qui en est issu par mélange avec d'autres composants, comme par exemple une composition bitumineuse additivée.

Selon un premier mode de mise en œuvre, le milieu à traiter peut être toute composition d'huile brute comprenant des asphaltènes, et notamment, une composition localisée dans une réserve souterraine, une composition d'huile brute extraite du sol, une composition de bitume, ou toute fraction hydrocarbonée issue d'une composition d'huile brute par une méthode de fractionnement, telle que par exemple raffinage, extraction. Selon l'invention, on inclut dans les bitumes : les bitumes d'origine naturelle, ceux contenus dans des gisements de bitume naturel, d'asphalte naturel ou les sables bitumineux. L'invention concerne également les bitumes provenant du raffinage du pétrole brut, en particulier de la distillation atmosphérique et/ou sous vide du pétrole. Ces bitumes pouvant être éventuellement soufflés, viscoréduits et/ou désasphaltés et/ou mélangés. On inclut dans les produits dérivés des compositions d'huile brute, les liants bitumineux.

Par liant bitumineux, on entend les liants obtenus directement à partir des huiles brutes naturelles ou bien à partir du traitement des huiles brutes naturelles. Ces liants bitumineux peuvent être obtenus par différents procédés de raffinage des huiles brutes (distillation atmosphérique ; distillation sous vide).

L'invention vise à éviter, prévenir, retarder ou réduire la précipitation d'asphaltènes. Ce phénomène peut concerner des compositions ayant des teneurs en asphaltènes très variées, étant donné que le phénomène de précipitation des asphaltènes est du à la présence de ces composés, mais aussi à la présence ou à l'absence d'autres composants. Par exemple, dans des huiles brutes les alcanes favorisent la précipitation des asphaltènes et les résines contribuent à leur solubilisation. Le mélange d'huiles brutes de compositions différentes peut entrainer une précipitation des composés les plus lourds tels que les asphaltènes.

Selon un second mode de mise en œuvre, le milieu à traiter peut être une composition d'asphalte, ou d'enrobé bitumineux ou un liant bitumineux pour sa mise en œuvre dans une composition d'asphalte, ou d'enrobé bitumineux.

Par asphalte, on entend un mélange de liant bitumineux avec des charges minérales. Les charges minérales sont constituées de fines (particules de dimensions inférieures à 0,063 mm), de sable (particules de dimensions comprises entre 0,063 mm et 2 mm) et éventuellement de gravillons (particules de dimensions supérieures à 2 mm, de préférence comprises entre 2 mm et 4 mm).

Par enrobé bitumineux, on entend un mélange de liant bitumineux avec des granulats et éventuellement des charges minérales. Les granulats sont des granulats minéraux et/ou synthétiques, notamment, des fraisats de recyclage, de dimensions supérieures à 2 mm, de préférence comprises entre 2 mm et 14 mm.

Les asphaltes sont principalement utilisés pour fabriquer et recouvrir des trottoirs, alors que les enrobés sont utilisés pour fabriquer des routes. Contrairement aux enrobés, les asphaltes ne sont pas compactés au rouleau lors de leur mise en place.

### Composition d'additifs comprenant la résine alkylphénol-aldéhyde modifiée

En fonction du mode de mise en œuvre de l'invention, on formule des compositions adaptées à base de résine alkylphénol-aldéhyde modifiée.

### - Composition d'additifs pour les huiles brutes et les fractions hydrocarbonés issues des huiles brutes :

Selon un premier mode de réalisation préféré, la résine alkylphénol-aldéhyde modifiée est utilisée sous une forme diluée dans un solvant ou un dispersant. Ce mode de réalisation concerne l'additivation des compositions d'huiles brutes et des fractions hydrocarbonées qui en sont issues.

A titre d'exemple, le solvant ou le dispersant est choisi parmi les hydrocarbures aliphatiques et/ou aromatiques et les mélanges d'hydrocarbures, par exemple les fractions d'essence, du kérosène, le décane, le pentadécane, le toluène, le xylène, l'éthylbenzène, les mélanges de solvants commerciaux comme Solvarex 10 ^{®}, Solvarex 10 LN ^{®},Solvent Naphta ^{®},Shellsol AB ^{®},Shellsol D ^{®},Solvesso 150 ^{®}, Solvesso 150 ND ^{®}, Solvesso 200 ^{®}, Exxsol ^{®}, ISOPAR ^{®}. Le solvant ou le dispersant est de préférence aromatique.

La composition peut également contenir, en plus du solvant, un adjuvant de dissolution polaire, comme le 2-éthylhexanol, le décanol, l'isodécanol et/ou l'isotridécanol.

La concentration massique de la résine alkylphénol-aldéhyde modifiée diluée dans le solvant ou le dispersant peut, avantageusement, varier de 1 à 99,5%, de préférence de 5 à 95%, plus préférentiellement de 10 à 90% et encore plus préférentiellement de 30 à 90%.

La viscosité de la résine de condensation alkylphénol-aldéhyde modifiée, diluée avec 30% en masse de solvant aromatique mesurée à 50°C à l'aide d'un rhéomètre dynamique avec une vitesse de cisaillement de 100 s⁻¹ est, de préférence, comprise entre 1000 et 10000 mPa.s, de préférence entre 1500 et 6000 mPa.s, et avantageusement entre 2500 et 5000 mPa.s.

La résine alkylphénol-aldéhyde modifiée peut également être utilisée dans une composition en association avec un ou plusieurs additifs additionnels.

Comme additifs additionnels susceptibles d'être utilisés en association avec la résine alkylphénol-aldéhyde modifiée on peut citer : les dispersants/détergents, les passivateurs métalliques, les antioxydants, les inhibiteurs de corrosion, les biocides, les désémulsifiants, anti-mousses , les inhibiteurs de dépôts de paraffines ; les abaisseurs de point d'écoulement, les additifs anti-sédimentation des paraffines ; les piégeurs d'H2S , les inhibiteurs de dépôts organiques tels que les acides naphténiques, les inhibiteurs de dépôts minéraux, les marqueurs, les stabilisateurs thermiques, les émulsifieurs, les agents réducteurs de frottements, les surfactants, les réodorants, et leurs mélanges.

Parmi les autres additifs additionnels, on peut citer particulièrement :
a) les additifs anti-mousse, notamment (mais non limitativement) choisis parmi les polysiloxanes, les polysiloxanes oxyalkylés, et les amides d'acides gras issus d'huiles végétales ou animales ;
b) les additifs détergents et/ou anti-corrosion, notamment (mais non limitativement) choisis dans le groupe constitué par les aminés, les succinimides, les alkénylsuccinimides, les polyalkylamines, les polyalkyles polyamines et les polyétheramines; les imidazolines;
c) les additifs de lubrifiance ou agent anti-usure, notamment (mais non limitativement) choisi dans le groupe constitué par les acides gras et leurs dérivés ester ou amide, notamment le monooléate de glycérol, et les dérivés d'acides carboxyliques mono- et polycycliques ;
d) les additifs modificateurs de la cristallisation, les additifs inhibiteurs de dépôts de paraffines, les additifs abaisseurs du point d'écoulement ; les modificateurs de la rhéologie à basse température tels que les copolymères éthylène/vinyl acétate (EVA) et/ou éthylène/vinyl propionate (EVP), les terpolymères éthylène/ acétate de vinyle/ versatate de vinyle (E/VA/VeoVA) ; les terpolymères éthylène/ acétate de vinyle/ acrylate d'alkyle ; les copolymères EVA modifiés par greffage ; les polyacrylates ; les terpolymères acrylates/acétate de vinyle/anhydride maléique ; les copolymères anhydride maléique/alkyl(méth)acrylate amidifiés susceptibles d'être obtenus par réaction d'un copolymère anhydride maléique/alkyl(méth)acrylate et d'une alkylamines ou polyalkylamine ayant une chaîne hydrocarbonée de 4 et 30 atomes de carbone, de préférence, de 12 à 24 atomes de carbone ; les copolymères d'alpha-oléfine/anhydride maléique amidifiés susceptibles d'être obtenus par réaction d'un copolymère d'alpha-oléfine/anhydride maléique et d'une alkylamine ou polyalkylamine, l'alpha-oléfine pouvant être choisi parmi les alpha-oléfine en C10-C50, de préférence, en C16-C20 et l'alkylamine ou la polyalkylamine ayant, avantageusement, une chaîne hydrocarbonée de 4 à 30 atomes de carbone, de préférence de 12 à 24 atomes de carbone. A titre d'exemples de terpolymères, on peut citer ceux qui sont décrits dans EP01692196, WO2009/106743, WO2009/106744, US4758365 et US4178951.
e) des antioxydants, par exemple de type phénoliques encombrés ou aminés de type paraphénylène diamine alkylés ;
f) les passivateurs de métaux ;
g) les neutralisateurs d'acidité.

### - Composition d'additifs pour les produits dérivés des bitumes :

Selon un second mode de mise en œuvre préféré, l'invention concerne les produits dérivés des bitumes, tels que les enrobés et les asphaltes. L'additif résine alkylphénol-aldéhyde modifié est avantageusement introduit dans le bitume sous forme pure (c'est-à-dire tel quel) ou en dilution dans une huile. Cette huile peut être synthétique ou d'origine minérale ou végétale ou une combinaison des trois. Cette huile ne s'évapore pas et sa présence ne modifie pas les propriétés du liant bitumineux final. Le pourcentage d'huile peut être compris entre 0 et 50% en masse du mélange huile plus additif, et préférentiellement entre 20 et 50% en masse.

Outre les additifs a) à g) décrits ci-dessus la composition d'additifs pour les produits dérivés des bitumes peut encore comprendre un ou plusieurs additifs choisis parmi :
h) les additifs permettant d'abaisser la température de mélange des asphaltes et des enrobés, ceux permettant d'améliorer l'adhésion des liants bitumineux sur les charges et les granulats, comme par exemple les polyisobutylène succinimides

### Procédé de traitement des huiles brutes et des produits dérivés :

L'invention concerne encore un procédé de traitement d'une composition d'huiles brutes ou d'un produit dérivé d'une composition d'huile brute et comprenant des asphaltènes, ce procédé comprenant au moins :
(i) l'introduction d'au moins une résine alkylphénol-aldéhyde modifiée dans la composition d'huiles brutes ou dans le produit dérivé d'une composition d'huile brute et comprenant des asphaltènes,
(ii) une étape de traitement choisie parmi : une élévation de pression, une élévation de température, un mélange avec au moins un autre fluide.

Selon l'invention, les deux étapes peuvent être mises en œuvre simultanément ou successivement. Préférentiellement l'étape (ii) est mise en œuvre après l'étape (i). Lorsque les deux étapes sont mises en œuvre de façon successive, il est possible de prévoir une ou plusieurs étapes intermédiaires après l'étape (i) et avant l'étape (ii).

### - Mise en œuvre dans les compositions d'huiles brutes et les fractions hydrocarbonées :

Dans le cas des huiles brutes et des fractions hydrocarbonées qui en sont issues, par exemple par raffinage ou extraction, le traitement peut être mis en œuvre à toute étape depuis la récupération des huiles brutes dans un réservoir, jusqu'au raffinage et à l'utilisation des fractions hydrocarbonées, en passant par le transport de ces différents produits. L'invention vise à maintenir les asphaltènes en dispersion dans le milieu de façon à améliorer la récupération des huiles brutes, à empêcher, prévenir, diminuer, retarder la précipitation des asphaltènes, la formation de dépôts d'asphaltènes, l'encrassement, dans les réservoirs, les installations de traitement et de transport tels que les équipements d'extraction, de raffinage, les pipelines, les canalisations de tous types, les filtres, les cuves de stockage.

Avantageusement, la composition d'huile brute ou la fraction hydrocarbonée d'huile brute est additivée avec une quantité de résine alkylphénol-aldéhyde modifiée comprise entre 1 et 5000 ppm massique, de préférence entre 10 et 2000 ppm, plus préférentiellement entre 50 et 1500 ppm, encore plus préférentiellement entre 100 et 1200 ppm.

L'étape (ii) peut, de façon non limitative, correspondre à une mise sous pression, par exemple dans un pipeline ou tout type de canalisation, ou au travers d'un filtre ; elle peut comprendre un chauffage dans une installation de raffinage, une injection d'un gaz ou un mélange avec une autre variété de brut ou avec une autre qualité d'huile lourde issue du raffinage.

De façon classique, de telles étapes de traitement entrainent une précipitation des asphaltènes et un encrassement et/ou un colmatage des installations. Les additifs résine alkylphénol-aldéhyde modifiée de l'invention permettent le maintien en dispersion des asphaltènes au cours de ces étapes de traitement et améliorent la compatibilité des asphaltènes avec la partie non asphalténique de l'huile. Ces additifs permettent ainsi d'éviter ou bien de limiter les phénomènes d'agglomération ou flocculation des asphaltènes.

### - Mise en œuvre dans des compositions bitumineuses :

Les compositions bitumineuses, telles que liant bitumineux, enrobé, asphalte, se caractérisent par des étapes de mélange à chaud, pour lesquelles l'introduction de l'additif résine alkylphénol-aldéhyde modifiée présente l'avantage de permettre un mélange efficace à une température plus basse, comparativement aux compositions antérieures, sans dégrader les propriétés d'usage de ces compositions.

### - Procédé de préparation d'un liant bitumineux :

L'invention concerne encore un procédé de préparation d'un liant bitumineux tel que défini ci-dessus, comprenant le mélange du bitume et de la résine alkylphénol aldéhyde modifiée. D'autres composants, additifs habituels des liants bitumineux, décrits ci-dessous, peuvent également être présents dans ce mélange. De préférence, dans ce procédé, la température à laquelle est réalisé ce mélange est comprise entre 100°C et 170°C, de préférence entre 110°C et 150°C, plus préférentiellement entre 120°C et 130°C. La durée de mélange est comprise entre 10 minutes et 4 heures, de préférence entre 30 minutes et 3 heures, plus préférentiellement entre 1 heure et 2 heures.

L'invention concerne aussi l'utilisation d'une résine alkylphénol-aldéhyde modifiée dans un liant bitumineux comprenant au moins un bitume, pour diminuer la température de préparation du liant bitumineux.

### - Procédé de préparation d'un enrobé :

L'invention concerne un procédé de préparation d'un enrobé bitumineux comprenant le mélange, ou enrobage, d'un liant bitumineux avec des granulats, le liant bitumineux comprenant au moins un bitume et au moins une résine alkylphénol-aldéhyde modifiée de l'invention.

De préférence dans ce procédé, le liant bitumineux comprend de 0,1 à 5% en masse de résine alkylphénol aldéhyde modifiée, par rapport à la masse totale de liant bitumineux, de préférence de 0,5 à 3% en masse, plus préférentiellement de 0,5 à 2% en masse.

Avantageusement, la température d'enrobage du liant bitumineux et des granulats est comprise entre 100°C et 150°C, de préférence entre 110°C et 140°C, plus préférentiellement entre 120°C et 130°C

De préférence, le liant bitumineux et les granulats sont tous deux à une température comprise entre 100°C et 150°C, de préférence entre 110°C et 140°C, plus préférentiellement entre 120°C et 130°C, lors de l'enrobage.

Lors de l'enrobage, les granulats et le liant bitumineux additivé sont soit tous les deux à la même température entre 100°C et 150°C, de préférence entre 110°C et 140°C, plus préférentiellement entre 120°C et 130°C, soit le liant bitumineux additivé est à une température autour de 160°C et les granulats sont à une température entre 100°C et 150°C, de préférence entre 110°C et 140°C, plus préférentiellement entre 120°C et 130°C. En raison de la quantité importante de granulats par rapport au liant bitumineux additivé (à peu près 95% en masse de granulats par rapport à 5% en masse de liant bitumineux additivé), c'est la température des granulats qui dicte la température globale d'enrobage qui sera donc entre 100°C et 150°C, de préférence entre 110°C et 140°C, plus préférentiellement entre 120°C et 130°C.

On préfère utiliser les granulats à la température entre 100°C et 150°C, de préférence entre 110°C et 140°C, plus préférentiellement entre 120°C et 130°C et le liant bitumineux additivé à la même température entre 100°C et 150°C, de préférence entre 110°C et 140°C, plus préférentiellement entre 120°C et 130°C.

Etant donné que l'additivation du liant bitumineux par la résine alkylphénol aldéhyde modifiée ne joue pas sur la viscosité du liant bitumineux et ne diminue pas celle-ci, lorsque la viscosité du liant bitumineux est trop importante pour permettre le pompage du liant bitumineux, on préfère alors utiliser le liant bitumineux additivé vers 160°C et les granulats à une température entre 100°C et 150°C, de préférence entre 110°C et 140°C, plus préférentiellement entre 120°C et 130°C, la température globale d'enrobage étant alors quand même comprise entre 100°C et 150°C, de préférence entre 110°C et 140°C, plus préférentiellement entre 120°C et 130°C. Dans ce cas là, le liant bitumineux additivé est de préférence à une température comprise entre 120°C et 180°C, de préférence entre 140°C et 160°C et les granulats à une température entre 100°C et 150°C, de préférence entre 110°C et 140°C, plus préférentiellement entre 120°C et 130°C, la température globale d'enrobage étant toujours comprise entre 100°C et 150°C, de préférence entre 110°C et 140°C, plus préférentiellement entre 120°C et 130°C.

Bien que la température d'enrobage soit plus faible dans le procédé selon l'invention, l'enrobage est de bonne qualité et le temps d'enrobage n'est pas augmenté par rapport à un procédé traditionnel à plus haute température. Ainsi le temps d'enrobage du procédé selon l'invention est compris entre 2 secondes et 30 minutes, de préférence entre 5 secondes et 20 minutes, plus préférentiellement entre 10 secondes et 10 minutes, encore plus préférentiellement entre 20 secondes et 5 minutes, encore plus préférentiellement entre 30 secondes et 1 minute. Il est préférable que le temps de malaxage ou temps d'enrobage soit le plus court possible pour éviter la formation de fines et le changement de distribution des granulats. Il n'est de toute façon pas nécessaire d'avoir des temps d'enrobage plus longs dans la présente invention et on cherche même à ce qu'ils soient les plus courts possibles.

Une fois les granulats enrobés, le mélange liant bitumineux additivé/granulats est répandu. La température de mise en œuvre lors du répandage du mélange liant bitumineux/granulats est comprise entre 80°C et 130°C, de préférence entre 90°C et 120°C, plus préférentiellement entre 100°C et 110°C. Le tout est ensuite compacté et la température de compactage du mélange répandu est comprise entre 70°C et 120°C, de préférence entre 80°C et 110°C, plus préférentiellement entre 90°C et 100°C. L'ensemble est ensuite refroidi à température ambiante.

L'invention concerne aussi un enrobé bitumineux susceptible d'être obtenu par le procédé tel que défini ci-dessus. Les enrobés comprennent un liant bitumineux, des granulats et éventuellement des charges. L'enrobé bitumineux comprend de 1 à 10 % en masse de liant bitumineux additivé, par rapport à la masse totale de l'enrobé, de préférence de 4 à 8% en masse.

L'invention concerne aussi l'utilisation d'une résine alkylphénol aldéhyde modifiée telle que décrite ci-dessus dans un liant bitumineux comprenant au moins un bitume, pour diminuer les températures de fabrication, de mise en œuvre et/ou de compactage lors de la préparation d'un enrobé bitumineux.

### - Procédé de préparation d'un asphalte :

L'invention concerne aussi un procédé de préparation d'un asphalte dans lequel on mélange un liant bitumineux et des charges, le liant bitumineux comprenant au moins un bitume et au moins une résine alkylphénol-aldéhyde modifiée de l'invention.

De préférence dans ce procédé, le liant bitumineux comprend de 0,1 à 5% en masse de résine alkylphénol aldéhyde modifiée, par rapport à la masse totale de liant bitumineux, de préférence de 0,5 à 3% en masse, plus préférentiellement de 0,5 à 2% en masse.

Avantageusement, la température de fabrication est comprise entre 140°C et 180°C, de préférence entre 150°C et 170°C.

De préférence, le liant bitumineux et les charges sont tous deux à une température comprise entre 140°C et 180°C, de préférence entre 150°C et 170°C, lors de leur mélange.

Il est à noter que lors de la fabrication, les charges et le liant bitumineux additivé sont tous les deux à la même température (entre 140°C et 180°C, de préférence entre 150°C et 170°C). Ensuite, le mélange liant bitumineux additivé/charges est coulé. La température de mise en œuvre lors du coulage du mélange liant bitumineux/charges est comprise entre 120°C et 160°C, de préférence entre 130°C et 150°C. L'ensemble est ensuite refroidi à température ambiante.

L'invention concerne aussi un asphalte susceptible d'être obtenu par le procédé tel que défini ci-dessus. Les asphaltes comprennent un liant bitumineux et des charges minérales. Avantageusement, l'asphalte comprend de 1 à 20 % en masse de liant bitumineux additivé, par rapport à la masse totale de l'asphalte, de préférence de 5 à 10% en masse

L'invention concerne aussi l'utilisation d'une résine alkylphénol aldéhyde modifiée telle que décrite ci-dessus dans un liant bitumineux comprenant au moins un bitume, pour diminuer les températures de fabrication et/ou de mise en œuvre lors de la préparation d'un asphalte.

### Compositions bitumineuses :

L'invention a encore pour objet une composition comprenant des asphaltènes, ladite composition étant choisie parmi les liants bitumineux, les enrobés bitumineux et les asphaltes, ladite composition comprenant au moins une résine alkylphénol-aldéhyde modifiée qui a été décrite ci-dessus.

De préférence, le liant bitumineux comprend de 0,1 à 5% en masse de résine alkylphénol-aldéhyde modifiée, par rapport à la masse totale de liant bitumineux, de préférence de 0,5 à 3% en masse, plus préférentiellement de 0,5 à 2% en masse.

On préfère utiliser une quantité d'additif la plus faible possible, pour des raisons économiques, mais aussi techniques. En effet si l'additif est présent en quantité importante dans le liant bitumineux, les propriétés du liant bitumineux telles que la pénétrabilité, la température Bille et Anneau, la viscosité, l'adhésivité, le module complexe et les propriétés de l'enrobé bitumineux obtenu à partit dudit liant bitumineux telles que la résistance Duriez, la résistance à l'orniérage et le module, peuvent en être affectées et devenir trop éloignées de celles du liant non additivé et de l'enrobé obtenu à partir du liant non additivé.

Parmi les bitumes utilisables dans les compositions selon l'invention, on peut citer tout d'abord les bitumes d'origine naturelle, ceux contenus dans des gisements de bitume naturel, d'asphalte naturel ou les sables bitumineux. Les bitumes selon l'invention sont aussi les bitumes provenant du raffinage du pétrole brut. Les bitumes proviennent de la distillation atmosphérique et/ou sous vide du pétrole. Ces bitumes pouvant être éventuellement soufflés, viscoréduits et/ou désasphaltés. Les différents bitumes obtenus par les procédés de raffinage peuvent être combinés entre eux pour obtenir le meilleur compromis technique. Le bitume peut aussi être un bitume de recyclage. Les bitumes peuvent être des bitumes de grade dur ou de grade mou. Les bitumes selon l'invention ont une pénétrabilité, mesurée à 25°C selon la norme EN 1426, comprise entre 5 et 200 1/10 mm, de préférence entre 10 et 100 1/10 mm, plus préférentiellement entre 20 et 60 1/10 mm, encore plus préférentiellement entre 30 et 50 1/10 mm.

De préférence, le liant bitumineux comprend en outre un polymère.

Les polymères utilisés sont des élastomères ou des plastomères. On peut citer par exemple, de manière indicative et non limitative, les élastomères thermoplastiques comme les copolymères statistiques ou séquencés de styrène et de butadiène, linéaire ou en étoile (SBR, SBS) ou de styrène et d'isoprène (SIS), les copolymères d'éthylène et d'acétate de vinyle, les copolymères d'éthylène et de propène, les terpolymères éthylène/propène/diène (EPDM), les terpolymères acrylonitrile/butadiène/styrène (ABS), les homopolymères et copolymères oléfiniques d'éthylène (ou propylène, ou butylène), les polyisobutylènes, les polybutadiènes, les polyisoprènes, les poly(chlorure de vinyle), les poudrettes de caoutchouc, les caoutchoucs butyle, les polychloroprènes, les polynorbornènes, les polybutènes, les polyisobutènes, les polyéthylènes ou encore tout polymère utilisé pour la modification des bitumes ainsi que leurs mélanges.

Les polymères préférés sont les copolymères de styrène et de butadiène. Le copolymère de styrène et de butadiène, possède avantageusement une teneur pondérale en styrène allant de 5% à 50% en masse, par rapport à la masse de copolymère, de préférence de 20% à 40%.

Le copolymère de styrène et de butadiène, possède avantageusement une teneur pondérale en butadiène, allant de 50% à 95% en masse, par rapport à la masse de copolymère, de préférence de 60% à 80%.

Parmi les motifs butadiène, on distingue les motifs à doubles liaisons 1-4 issus du butadiène et les motifs à doubles liaisons 1-2 issus du butadiène. Par motifs à doubles liaisons 1-4 issus du butadiène, on entend les motifs obtenus via une addition 1,4 lors de la polymérisation du butadiène. Par motifs à doubles liaisons 1-2 issus du butadiène, on entend les motifs obtenus via une addition 1,2 lors de la polymérisation du butadiène. Le résultat de cette addition 1,2 est une double liaison vinylique dite « pendante ».

Le copolymère de styrène et de butadiène, possède une teneur en motifs à doubles liaisons 1-2 issus du butadiène, comprise entre 5% et 50% en masse, par rapport à la masse totale des motifs butadiène, de préférence entre 10% et 40%, plus préférentiellement entre 15% et 30%, encore plus préférentiellement entre 20% et 25%, encore plus préférentiellement entre 18% et 23%.

Le copolymère d'hydrocarbure de styrène et de butadiène, a une masse moléculaire moyenne M_{W} comprise entre 4 000 et 500 000 daltons, de préférence entre 10 000 et 200 000, plus préférentiellement entre 50 000 et 150 000, encore plus préférentiellement entre 80 000 et 130 000, encore plus préférentiellement entre 100 000 et 120 000. La masse moléculaire du copolymère est mesurée par chromatographie GPC avec un étalon polystyrène selon la norme ASTM D3536 (remplacée par la norme ASTM D5296-05).

Le copolymère de styrène et de butadiène peut être linéaire ou étoilés, sous forme de dibloc, de tribloc et/ou être multibranché. Le copolymère d'hydrocarbure de styrène et de butadiène peut aussi comprendre éventuellement une charnière statistique. Un mélange de copolymères de styrène et de butadiène peut être envisagé.

On utilise en général une quantité de polymère de 1 à 20% en masse par rapport à la masse de liant bitumineux, de préférence de 5 à 10%, plus préférentiellement de 2 à 4%.

Ce polymère peut éventuellement être réticulé. Les agents réticulants utilisables sont de nature très variée et sont choisis en fonction du ou des type(s) de polymère(s) contenu(s) dans le liant bitumineux selon l'invention. De préférence, l'agent réticulant est choisi parmi le soufre seul ou en mélange avec des accélérateurs de vulcanisation. Ces accélérateurs de vulcanisation sont soit des polysulfures d'hydrocarbyle, soit des accélérateurs de vulcanisation donneurs de soufre, soit des accélérateurs de vulcanisation non donneurs de soufre. Les polysulfures d'hydrocarbyle peuvent être choisis parmi ceux qui sont définis dans le brevet FR2528439. Les accélérateurs de vulcanisation donneurs de soufre, peuvent être choisis parmi les polysulfures de thiurame, comme par exemple, les disulfures de tétrabutylthiurame, les disulfures de tétraéthylthiurame et les disulfures de tétraméthylthiurame. Les accélérateurs de vulcanisation non donneurs de soufre utilisables selon l'invention peuvent être des composés soufrés choisis notamment parmi le mercaptobenzothiazole et ses dérivés, les dithiocarbamates et leurs dérivés, et les monosulfures de thiurame et leurs dérivés. On peut citer par exemple le zinc-2-mercaptobenzothiazole, le dibutyldithiocarbamate de zinc, le monosulfure de tétraméthylthiurame. Pour plus de détails sur les accélérateurs de vulcanisation donneurs de soufre et non donneurs de soufre utilisables selon l'invention, on peut se référer aux brevets EP0360656, EP0409683 et FR2528439. On utilise en général une quantité d'agent réticulant de 0,05 à 2% en masse par rapport à la masse de liant bitumineux, de préférence de 0,1 à 1%, encore plus préférentiellement de 0,2 à 0,5.

Le liant bitumineux selon l'invention peut aussi comprendre des fluxants tels que des huiles à base de matières grasses animales et/ou végétales ou des huiles hydrocarbonées d'origine pétrolière. Les huiles d'origine animale et/ou végétale pourront être sous forme d'acides gras libres, de triglycérides, de diglycérides, de monoglycérides, sous forme estérifiée, par exemple sous forme d'ester méthylique.

Le liant bitumineux selon l'invention peut aussi comprendre des cires d'origine animale, végétale ou d'hydrocarbures, en particulier des cires hydrocarbonées à chaîne longue, par exemple des cires de polyéthylène ou des cires Fischer-Trospch. Les cires de polyéthylène ou les cires Fischer-Trospch pourront éventuellement être oxydées. Les cires amides telles que l'éthylène bis-stéaramide pourront aussi être ajoutées.

Le liant bitumineux selon l'invention peut aussi comprendre des résines d'origine végétale telles que les colophanes.

Le liant bitumineux selon l'invention peut aussi comprendre des acides tels que l'acide polyphosphorique ou des diacides, en particuliers des diacides gras.

Le liant bitumineux peut également comprendre des dopes d'adhésivité et/ou des agents tensioactifs. Ils sont avantageusement choisis parmi les dérivés d'alkylamines, les dérivés d'alkyl-polyamines, les dérivés d'alkylamidopolyamines, les dérivés d'alkyl amidopolyamines et les dérivés de sels d'ammonium quaternaire, pris seuls ou en mélange. Les plus utilisés sont les propylènes-diamines de suif, les amidoamines de suif, les ammoniums quaternaires obtenus par quaternisation des propylènes-diamines de suif, les propylènes-polyamines de suif.

On pourrait aussi ajouter des dérivés du sorbitol, des dérivés hydrazides, des dérivés de type imidazolidinone.

L'additif résine alkylphénol-aldéhyde modifiée permet de préparer des enrobés et des asphaltes à des températures de fabrication, de mise en œuvre, et de compactage plus basses que celles classiquement utilisées et ce à de très faibles teneurs dans le liant bitumineux. On parle ainsi de procédé de préparation d'enrobés bitumineux et d'asphaltes dits « tièdes » et non plus « chauds ». Cet additif permet une très bonne adhésivité et mouillabilité du liant bitumineux vis-à-vis des granulats, le liant bitumineux est très maniable, et ce même à des températures plus basses que celles mises en œuvre traditionnellement.

L'utilisation de cet additif permet d'abaisser lesdites températures de tous les bitumes (bitumes de grade dur, bitumes de grade intermédiaire, bitumes de grade mou), quelque soit leur pénétrabilité. Ainsi l'additif est adapté aux bitumes de pénétrabilité comprise entre 35 et 50 1/10 mm et aux bitumes de pénétrabilité comprise entre 10 et 20 1/10 mm.

Cet additif permet d'abaisser lesdites températures tout en préservant les propriétés mécaniques des enrobés bitumineux et des asphaltes coulés, et ce à de très faibles teneurs en additifs.

L'invention a aussi pour objet, l'utilisation de liants bitumineux, d'enrobés et d'asphaltes coulés selon l'invention pour la fabrication de revêtements de routes, de chaussées, de trottoirs, de voiries, d'aménagements urbains, de sols, d'étanchéité de bâtiments ou d'ouvrages, en particulier pour la fabrication en application routière, de couches de fondation, de couches de base, de couches d'assise, de couches de surface telles que les couches de liaison et/ou les couches de roulement.

### Figure :

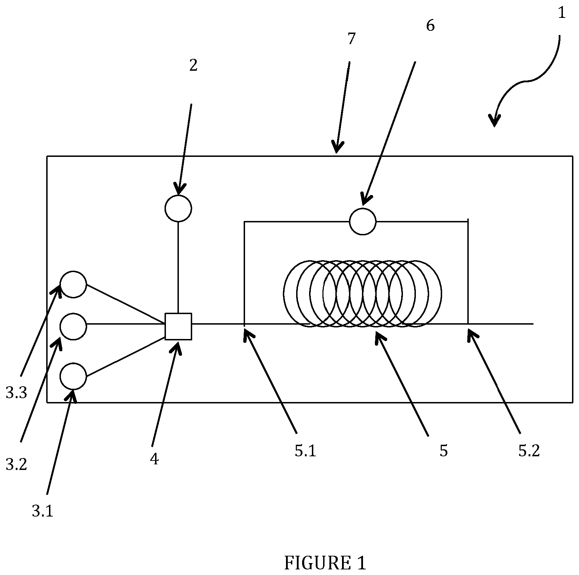

Figure 1 : Représentation schématique du pilote d'évaluation de performance en pression

### Partie expérimentale :

### A- Matériel et méthodes

Huiles brutes : On a utilisé trois huiles brutes de compositions différentes
HB1 : Huile comprenant 15% en masse d'asphaltènes, caractérisée par une note ASCI 9
HB2 : Huile comprenant 10% en masse d'asphaltènes, caractérisée par une note ASCI 11
HB3 : Huile comprenant 5% en masse d'asphaltènes, caractérisée par une note ASCI 12

La méthode ASCI (pour Asphaltene Solubility Class Index ou index de classe de solubilité des asphaltènes) est décrite dans N. Passade Boupat et al., SPE-164184-MS, Society of Petroleum Engineers, 2013 ; M. Rondon-Gonzalez et al., SPE-171891-MS, Society of Petroleum Engineers, 2014.

### Additifs :

Ad1 : Résine nonylphénol aldéhyde modifiée préparée suivant le mode opératoire N°1 Etape 1 suivie de l'Etape 2 ci-dessous - formulé dans un solvant aromatique en C10 (du type Solvarex 10) à une concentration de 50 % massique de matière active
Ad2 : Polyisobutylène succinimide commercialisé par la société Total ACS (Total Marketing & Services) - formulé dans un solvant aromatique en C10 (du type Solvarex 10) à une concentration de 50 % massique de matière active.
Ad3 : Octadecylsuccinimide - commercialisée par la société Total ACS sous la référence HFAS 100 - formulé dans un solvant aromatique en C10 (du type Solvarex 10) à une concentration de 27,5 % massique de matière active
Ad4 : Résine nonylphénol-aldéhyde non modifiée - formulé dans un solvant aromatique en C10 (du type Solvarex 10) - obtenue par le mode opératoire N°1 Etape 1 décrit ci-dessous.
Ad5 : Résine nonylphénol-aldéhyde non modifiée de faible masse formulé dans un solvant aromatique en C10 (du type Solvarex 10) - obtenue par le mode opératoire N°1 Etape 1 décrit ci-dessous.

Les caractéristiques des résines Ad4 et Ad5 sont répertoriées dans le tableau 1 suivant :

| Référence | Chaine alkyl | Taux de Matière active (*) | Mw (Da) (**) |
|---|---|---|---|
| Ad4 | C9 | 67,10% | 5000 |
| Ad5 | C9 | 70,60% | 2500 |

| | | | |
|---|---|---|---|
| (*) % en masse, en solution dans du toluène (**) Masse molaire moyenne en masse | | | |

Ad6 : Polyacrylate en C12-C14, de Masse molaire moyenne en masse Mw = 12000 Da - formulé dans un solvant aromatique en C10 (du type Solvarex 10) à une concentration de 35% massique de matière active
Ad7 : Polyacrylate en C18-C22, de Masse molaire moyenne en masse Mw = 12000 Da - formulé dans un solvant aromatique en C10 (du type Solvarex 10) à une concentration de 35% massique de matière active

### Mode opératoire N° 1 : synthèse de la résine alkylphénol aldéhyde modifiée

Etape 1 : Dans une première étape, on prépare une résine alkylphénol-aldéhyde par condensation de para-nonylphénol et de formaldéhyde (par exemple selon le mode opératoire décrit dans EP 857 776) de viscosité à 50°C comprise entre 1800 et 4800 mPa.s (viscosité mesurée à 50°C à l'aide d'un rhéomètre dynamique avec une vitesse de cisaillement de 10 s⁻¹sur la résine diluée avec 30% en masse de solvant aromatique (Solvesso 150 ^{®})).

Etape 2 : Dans une seconde étape, la résine alkylphénol-aldéhyde issue de la première étape est modifiée par réaction de Mannich par ajout de 2 équivalents molaires de formaldéhyde et 2 équivalents molaires de dipropylènetriamine de suif, connue sous la dénomination N-(Tallowalkyl)dipropylènetriamine et commercialisée par exemple sous la dénomination Trinoram S ^{®}, par rapport à la résine alkylphénol-aldéhyde issue de la première étape.

Les caractéristiques de la résine obtenue à l'issue de l'étape 2 sont répertoriées dans le tableau 2 suivant :

**Tableau 2**

| N° résine | Alkylamine utilisée | Matières sèches (1g / 30 mn / 200°C) | Viscosité à 50°C (mPa.s) (*) | NPhe (**) |
|---|---|---|---|---|
| Ad1 | Trinoram S ^{®} | 70,10% | 4855 | 14,1 |

| | | | | |
|---|---|---|---|---|
| (*) Viscosité à 50°C : mesurée sur une résine diluée avec 70 % massique de Solvesso 150 ^{®}, vitesse de cisaillement 10 s⁻¹, à l'aide d'un rhéomètre Haake RheoWin ^{®}. (**) Evaluation du nombre moyen de noyaux phénoliques par molécule de résine ou N_{Phe} : mesuré par résonnance magnétique nucléaire du proton. | | | | |

### B- Expériences :

### - Etude de résistance au colmatage :

L'étude est réalisée dans un pilote (1) dont les différents composants sont illustrés sur la figure 1 :
Le test a pour objectif l'étude de la cinétique de précipitation et de colmatage des asphaltènes dans un tube capillaire en conditions de flux continu. Le principe de la mesure consiste dans l'injection dans un tube capillaire d'un mélange d'huile brute et de solvant à un débit déterminé et constant. On mesure la chute de pression le long du tube capillaire. La différence de pression ΔP (en Pa) est liée au flux (en m³/s) par la loi de Hagen Poiseuille : $Δ P = \frac{8 n}{{πR}^{4}} LQ$ dans laquelle R et L représentent respectivement le rayon (en mètres) et la longueur (en mètres) du capillaire, n représente la viscosité du fluide (en Pa.s). Lorsqu'un dépôt d'asphaltènes se forme dans le capillaire, R décroit, ce qui entraine une augmentation de P. Les pompes sont équipées d'un système de sécurité qui arrête l'injection lorsque la pression atteint 8 bars.

L'échantillon peut être composé d'huile brute, de solvant et d'additifs en proportions variées. La précipitation des asphaltènes peut être provoquée par le mélange d'un solvant aliphatique léger avec l'huile brute.

Le dispositif expérimental représenté sur la figure 1 comporte quatre seringues actionnées par des pompes (PHD Ultra 4400, Harvard Apparatus) qui convergent dans un mélangeur statique (4) situé au niveau de l'entrée (5.1) du capillaire. La pompe (2) est utilisée pour injecter l'huile brute, Les pompes (3.1) et (3.2) sont utilisées pour injecter respectivement une solution d'additif (dans du toluène) et un solvant tel que de l'heptane. La dernière pompe (3.3) est utilisée pour nettoyer le circuit ou pour calibrer le système avec le toluène. Avant l'entrée dans le mélangeur statique (4), l'huile brute, le ou les additif(s), les solvants, sont conditionnés dans le four (7) à une température contrôlée de 45 °C. L'ensemble est mélangé au moyen du mélangeur statique (4) puis injecté à l'entrée (5.1) du tube capillaire (5) de 3m de longueur et 0,38 mm de diamètre. L'ensemble du dispositif est placé dans le four (7) de façon à maintenir une température contrôlée de 45 °C. On mesure la perte de charge entre l'entrée (5.1) et la sortie (5.2) du capillaire (5) en temps réel au moyen de transducteurs piezoélectriques (6) reliés aux extrémités (5.1) et (5.2) du capillaire.

### Principe du test :

Dans un premier temps (protocole 1), on détermine le ratio Huile / Heptane préalablement au test capillaire afin de déterminer les conditions de précipitation des asphaltènes. Ensuite, on injecte dans le capillaire (5) l'huile et l'heptane non additivés avec le ratio heptane/huile identifié dans la première étape, ce qui permet de déterminer le temps de blocage initial du capillaire (5). Ensuite (protocole 2) grâce à l'additif on décale ce temps de blocage vers des temps plus importants.

### Protocole 1 : Test de balayage en concentration d'additif

Dans cet essai, l'additif est injecté dans le capillaire (5) en plusieurs étapes, suivant une rampe décroissante de concentration d'additif par rapport à l'huile. L'additif est en solution dans l'heptane, la solution d'additif dissous dans l'heptane présente une concentration fixe. En premier lieu, on injecte du toluène puis de l'heptane et l'huile.

Le rapport de l'huile brute / heptane est maintenu constant pendant le test, et le rapport entre la solution additif / heptane diminue à chaque étape comme cela est résumé dans le tableau 3. Chaque étape a une durée de 210 minutes. L'objectif de cette expérience est de déterminer les gammes de concentration d'additif dans lesquelles celui-ci a un effet sur la dispersion des asphaltènes.

Pour l'huile brute testée (HB2, mais ce protocole peut être mis en œuvre avec toute huile brute), le début de précipitation de l'huile brute (témoin) a été déterminé comme un rapport de 3 volumes d'heptane pour un volume d'huile: Heptane / Huile = 3.

**Tableau 3**

| | | | Flow rates (µL/min) | | | |
|---|---|---|---|---|---|---|
| Etape | Durée (min) | Quantité d'additif (ppm) | Toluène | Huile brute | Heptane | Solution d'additif dans l'heptane |
| 1 | 90 | 0 | 150 | 0 | 0 | 0 |
| 2 | 210 | 10000 | 0 | 50 | 50 | 100 |
| 3 | 210 | 3000 | 0 | 50 | 120 | 30 |
| 4 | 210 | 1000 | 0 | 50 | 140 | 10 |
| 5 | 210 | 300 | 0 | 50 | 147 | 3 |

### Protocole 2 : Test à concentration d'additif fixée

Après une analyse de la concentration limite, une concentration donnée pour chaque additif peut être sélectionnée, pour laquelle les performances seuil sont identifiées. Ainsi, pour cette partie du test, pour l'additif selon l'invention, Ad1, un flux constant de 1000 ppm de l'additif dissout dans l'heptane est injecté dans le capillaire avec l'huile brute, en gardant le rapport de volume 3: 1 heptane: huile brute. Les débits correspondants sont résumés dans le tableau 4. La température a été fixée à 45 ° C dans chaque test. L'objectif de ce test est de déterminer l'action de l'additif dans le temps, à une dose donnée, dans des conditions d'écoulement. On mesure le temps au bout duquel la pression de 8 bars est atteinte.

**Tableau 4**

| | | | Flow rates (µL/min) | | |
|---|---|---|---|---|---|
| Etape | Durée (min) | Quantité d'additif (ppm) | Toluène | Huile brute | Solution d'additif |
| 1 | 90 | 0 | 150 | 0 | 0 |
| 2 | 840 | 1000 | 0 | 50 | 150 |

On détermine ensuite pour des concentrations différentes et pour des additifs variés, le temps au bout duquel la pression de 8 bars est atteinte. Plus le temps pour atteindre cette pression de 8 bars est important, plus l'efficacité de l'additif en tant que dispersant d'asphaltènes est élevée.

### C- Résultats :

Les résultats sont rapportés dans les tableaux 5, 6 et 7 ci-dessous :

**Tableau 5 : Résultats des tests de performance en pression pour l'huile HB1**

| Huile | HB1 | | |
|---|---|---|---|
| Additif | Concentration additif (*) | Dosage additif en matière active (ppm) | Résultat (h) |
| Sans additif | | | 3,5 |
| Ad1 | 50 % | 1000 | 8 |
| Ad1 | 50 % | 700 | 9,5 |
| Ad2 | 50 % | 1000 | 3,5 |
| Ad3 | 27,5 % | 550 | 6,2 |
| Ad3 | 27,5 % | 1000 | 7 |
| Ad4 | 67,1 % | 1000 | 5,3 |
| Ad5 | 70,6 % | 1000 | 3 |

**Tableau 6 : Résultats des tests de performance en pression pour l'huile HB2**

| Huile | HB2 | | |
|---|---|---|---|
| Additif | Concentration additif (*) | Dosage additif en matière active (ppm) | Résultat (h) |
| Sans additif | | | 3,5 |
| Ad1 | 50 % | 1000 | > 12 |
| Ad1 | 50 % | 700 | - |
| Ad2 | 50 % | 1000 | 9 |
| Ad3 | 27,5 % | 700 | - |
| Ad3 | 27,5 % | 550 | 4,5 |
| Ad4 | 67,1 % | 700 | - |
| Ad5 | 70,6 % | 700 | - |
| Ad6 | 35 % | 700 | - |
| Ad7 | 35 % | 700 | 9 |

**Tableau 7 : Résultats des tests de performance en pression pour l'huile HB3**

| Huile | HB3 | | |
|---|---|---|---|
| Additif | Concentration additif (*) | Dosage additif en matière active (ppm) | Résultat (h) |
| Sans additif | | | 3 |
| Ad1 | 50% | 1000 | > 12 |
| Ad2 | 50% | 1000 | 9 |
| Ad3 | 27,5 % | 550 | 7 |
| Ad7 | 35 % | 700 | 8 |

| | | | |
|---|---|---|---|
| (*) concentration massique de l'additif dans le solvant | | | |

Les résines alkylphénol-aldéhyde modifiées selon la présente invention sont remarquables en ce qu'elles sont particulièrement efficaces pour disperser les asphaltènes et/ou pour prévenir et/ou retarder et/ou empêcher et/ou réduire la précipitation des asphaltènes, sur une large gamme d'huiles brutes, comparativement aux additifs dispersants d'asphaltènes de l'art antérieur.

## Revendications

1. Utilisation d'au moins une résine alkylphénol-aldéhyde modifiée dans une composition d'huiles brutes ou dans un produit dérivé d'une composition d'huiles brutes et comprenant des asphaltènes, pour disperser les asphaltènes et/ou pour prévenir et/ou retarder et/ou empêcher et/ou réduire la précipitation des asphaltènes, ladite résine alkylphénol-aldéhyde modifiée étant susceptible d'être obtenue par réaction de Mannich d'une résine de condensation alkylphénol-aldéhyde
• avec au moins un aldéhyde et/ou une cétone ayant de 1 à 8 atomes de carbone, de préférence de 1 à 4 atomes de carbone ;
• et au moins un composé hydrocarboné ayant au moins un groupement alkylamine, ayant entre 1 et 30 atomes de carbone, de préférence entre 4 et 30 atomes de carbone,
ladite résine de condensation alkylphénol-aldéhyde étant elle-même susceptible d'être obtenue par condensation
• d'au moins un alkylphénol substitué par au moins un groupement alkyle, linéaire ou ramifié, ayant de 1 à 30 atomes de carbone, de préférence un monoalkylphénol,
• avec au moins un aldéhyde et/ou une cétone ayant de 1 à 8 atomes de carbone, de préférence de 1 à 4 atomes de carbone.

2. Utilisation selon la revendication 1, pour sa mise en œuvre dans une composition d'huiles brutes ou dans un produit dérivé d'une composition d'huiles brutes et comprenant des asphaltènes soumis à une ou plusieurs des conditions suivantes :
• une élévation de pression,
• une élévation de température,
• un mélange avec au moins un autre fluide.

3. Utilisation selon l'une quelconque des revendications 1 et 2, dans laquelle la résine alkylphénol-aldéhyde modifiée est susceptible d'être obtenue à partir de p-nonylphénol, de formaldéhyde et d'au moins un composé hydrocarboné ayant au moins un groupement alkylmonoamine ou alkylpolyamine.

4. Utilisation selon l'une quelconque des revendications 1 à 3, dans laquelle la résine alkylphénol-aldéhyde modifiée est mise en œuvre sous forme diluée dans un solvant, de préférence dans un solvant aromatique, ou dans une huile.

5. Utilisation selon l'une quelconque des revendications 1 à 4, dans une composition d'huiles brutes ou dans une fraction hydrocarbonée d'huiles brutes comprenant des asphaltènes.

6. Utilisation selon la revendication 5, dans un équipement choisi parmi : un réservoir, une installation de raffinage, un pipeline, un puits de forage, un équipement de transport, un filtre.

7. Utilisation selon l'une quelconque des revendications 1 à 4, dans un produit dérivé d'une composition d'huiles brutes choisi parmi : les liants bitumineux, les enrobés bitumineux et les asphaltes, pour diminuer la température de préparation et/ou la température de mise en œuvre du liant bitumineux, et/ou pour diminuer les températures de fabrication, de mise en œuvre et/ou de compactage lors de la préparation d'un enrobé bitumineux, et/ou pour diminuer les températures de fabrication et/ou de mise en œuvre lors de la préparation d'un asphalte.

8. Composition comprenant des asphaltènes, choisie parmi : les compositions de bitume, les liants bitumineux, les enrobés bitumineux et les asphaltes,
ladite composition comprenant au moins une résine alkylphénol-aldéhyde modifiée susceptible d'être obtenue par réaction de Mannich d'une résine de condensation alkylphénol-aldéhyde
• avec au moins un aldéhyde et/ou une cétone ayant de 1 à 8 atomes de carbone, de préférence de 1 à 4 atomes de carbone;
• et au moins un composé hydrocarboné ayant au moins un groupement alkylamine, ayant entre 1 et 30 atomes de carbone, de préférence entre 4 et 30 atomes de carbone,
ladite résine de condensation alkylphénol-aldéhyde étant elle-même susceptible d'être obtenue par condensation
• d'au moins un alkylphénol substitué par au moins un groupement alkyle, linéaire ou ramifié, ayant de 1 à 30 atomes de carbone, de préférence un monoalkylphénol,
• avec au moins un aldéhyde et/ou une cétone ayant de 1 à 8 atomes de carbone, de préférence de 1 à 4 atomes de carbone.

9. Composition selon la revendication 8, dans laquelle la résine alkylphénol-aldéhyde modifiée est obtenue à partir d'au moins une alkylmonoamine ou d'au moins une alkylpolyamine ayant au moins un groupement amine primaire.

10. Composition selon la revendication 9, dans laquelle la résine alkylphénol-aldéhyde modifiée est obtenue à partir d'au moins une alkylmonoamine ou d'au moins une alkylpolyamine dont tous les groupements amine sont des amines primaires.

11. Composition selon l'une quelconque des revendications 8 à 10, dans laquelle l'alkylamine est choisie parmi :
- une alkylmonoamine à chaîne grasse ayant de 12 à 24 atomes de carbone, de préférence de 12 à 22 atomes de carbone, et
- une alkylpolyamine à chaîne grasse ayant de 12 à 24 atomes de carbone, de préférence de 12 à 22 atomes de carbone.

12. Composition selon l'une quelconque des revendications 8 à 11 qui est un liant bitumineux comprenant de 0,1 à 5% en masse de résine alkylphénol aldéhyde modifiée, par rapport à la masse totale de liant.

13. Enrobé bitumineux selon l'une quelconque des revendications 8 à 11, comprenant de 1 à 10 % en masse de liant bitumineux selon la revendication 10 et de 90 à 99% en masse de granulats, par rapport à la masse totale de l'enrobé.

14. Asphalte selon l'une quelconque des revendications 8 à 11, comprenant de 1 à 20 % en masse de liant bitumineux selon la revendication 10 et de 80 à 99% de charges, par rapport à la masse totale de l'asphalte.

15. Procédé de traitement d'une composition d'huiles brutes ou d'un produit dérivé d'une composition d'huiles brutes et comprenant des asphaltènes, ce procédé comprenant au moins :
(i) l'introduction d'au moins une résine alkylphénol-aldéhyde modifiée dans la composition d'huiles brutes ou dans le produit dérivé d'une composition d'huiles brutes et comprenant des asphaltènes,
(ii) une étape de traitement choisie parmi : une élévation de pression, une élévation de température, un mélange avec au moins un autre fluide,
ladite résine alkylphénol-aldéhyde modifiée étant susceptible d'être obtenue par réaction de Mannich d'une résine de condensation alkylphénol-aldéhyde
• avec au moins un aldéhyde et/ou une cétone ayant de 1 à 8 atomes de carbone, de préférence de 1 à 4 atomes de carbone;
• et au moins un composé hydrocarboné ayant au moins un groupement alkylamine, ayant entre 1 et 30 atomes de carbone, de préférence entre 4 et 30 atomes de carbone,
ladite résine de condensation alkylphénol-aldéhyde étant elle-même susceptible d'être obtenue par condensation
• d'au moins un alkylphénol substitué par au moins un groupement alkyle, linéaire ou ramifié, ayant de 1 à 30 atomes de carbone, de préférence un monoalkylphénol,
• avec au moins un aldéhyde et/ou une cétone ayant de 1 à 8 atomes de carbone, de préférence de 1 à 4 atomes de carbone.

## Patentansprüche

1. Verwendung von mindestens einem modifizierten Alkylphenol-Aldehyd-Harz in einer Rohölzusammensetzung oder in einem Derivatprodukt einer Rohölzusammensetzung, die bzw. das Asphaltene umfasst, zum Dispergieren der Asphaltene und/oder zum Vorbeugen und/oder Verzögern und/oder Verhindern und/oder Verringern der Ausfällung der Asphaltene, wobei das modifizierte Alkylphenol-Aldehyd-Harz erhältlich ist durch Mannich-Reaktion eines Alkylphenol-Aldehyd-Kondensationsharzes
• mit mindestens einem Aldehyd und/oder einem Keton mit 1 bis 8 Kohlenstoffatomen, vorzugsweise 1 bis 4 Kohlenstoffatomen
• und mindestens einer Kohlenwasserstoffverbindung mit mindestens einer Alkylamin-Gruppe, die zwischen 1 und 30 Kohlenstoffatome, vorzugsweise zwischen 4 und 30 Kohlenstoffatome, aufweist,
wobei das Alkylphenol-Aldehyd-Kondensationsharz selbst erhältlich ist durch Kondensation von:
• mindestens einem Alkylphenol, das durch mindestens eine geradkettige oder verzweigte Alkylgruppe mit 1 bis 30 Kohlenstoffatomen, vorzugsweise einem Monoalkylphenol, substituiert ist,
• mit mindestens einem Aldehyd und/oder einem Keton mit 1 bis 8 Kohlenstoffatomen, vorzugsweise 1 bis 4 Kohlenstoffatomen.

2. Verwendung nach Anspruch 1 zum Einsatz in einer Rohölzusammensetzung oder in einem Derivatprodukt einer Rohölzusammensetzung, die bzw. das Asphaltene umfasst und einer oder mehreren der folgenden Bedingungen ausgesetzt wird:
• einer Druckerhöhung,
• einer Temperaturerhöhung,
• Vermischen mit mindestens einem weiteren Fluid.

3. Verwendung nach einem der Ansprüche 1 und 2, wobei das modifizierte Alkylphenol-Aldehyd-Harz aus p-Nonylphenol, Formaldehyd und mindestens einer Kohlenwasserstoffverbindung mit mindestens einer Alkylmonoamin- oder Alkylpolyamin-Gruppe erhältlich ist.

4. Verwendung nach einem der Ansprüche 1 bis 3, wobei das modifizierte Alkylphenol-Aldehyd-Harz in verdünnter Form in einem Lösungsmittel, vorzugsweise in einem aromatischen Lösungsmittel, oder in einem Öl eingesetzt wird.

5. Verwendung nach einem der Ansprüche 1 bis 4 in einer Rohölzusammensetzung oder in einer Rohöl-Kohlenwasserstofffraktion, die Asphaltene umfasst.

6. Verwendung nach Anspruch 5 in einer Einrichtung, ausgewählt aus: einem Behälter, einer Raffinerieanlage, einer Pipeline, einem Bohrloch, einer Transporteinrichtung, einem Filter.

7. Verwendung nach einem der Ansprüche 1 bis 4 in einem Derivatprodukt einer Rohölzusammensetzung, ausgewählt aus: bitumenhaltigen Bindemitteln, bitumenhaltigem Mischgut und Asphalten, zum Absenken der Herstellungstemperatur und/oder der Verarbeitungstemperatur des bitumenhaltigen Bindemittels und/oder zum Absenken der Herstellungs-, der Verarbeitungs- und/oder der Verdichtungstemperatur bei der Herstellung eines bitumenhaltigen Mischguts und/oder zum Absenken der Herstellungs- und/oder Verarbeitungstemperatur bei der Herstellung eines Asphalts.

8. Zusammensetzung, umfassend Asphaltene, ausgewählt aus: Bitumenzusammensetzungen, bitumenhaltigen Bindemitteln, bitumenhaltigem Mischgut und Asphalten, wobei die Zusammensetzung mindestens ein modifiziertes Alkylphenol-Aldehyd-Harz umfasst, das erhältlich ist durch Mannich-Reaktion eines Alkylphenol-Aldehyd-Kondensationsharzes
• mit mindestens einem Aldehyd und/oder einem Keton mit 1 bis 8 Kohlenstoffatomen, vorzugsweise 1 bis 4 Kohlenstoffatomen;
• und mindestens einer Kohlenwasserstoffverbindung mit mindestens einer Alkylamin-Gruppe, die zwischen 1 und 30 Kohlenstoffatome, vorzugsweise zwischen 4 und 30 Kohlenstoffatome, aufweist,
wobei das Alkylphenol-Aldehyd-Kondensationsharz selbst erhältlich ist durch Kondensation von:
• mindestens einem Alkylphenol, das durch mindestens eine geradkettige oder verzweigte Alkylgruppe mit 1 bis 30 Kohlenstoffatomen, vorzugsweise einem Monoalkylphenol, substituiert ist,
• mit mindestens einem Aldehyd und/oder einem Keton mit 1 bis 8 Kohlenstoffatomen, vorzugsweise 1 bis 4 Kohlenstoffatomen.

9. Zusammensetzung nach Anspruch 8, wobei das modifizierte Alkylphenol-Aldehyd-Harz aus mindestens einem Alkylmonoamin oder mindestens einem Alkylpolyamin erhalten wird, das mindestens eine primäre Amingruppe aufweist.

10. Zusammensetzung nach Anspruch 9, wobei das modifizierte Alkylphenol-Aldehyd-Harz aus mindestens einem Alkylmonoamin oder mindestens einem Alkylpolyamin erhalten wird, bei dem alle Amingruppen primäre Amine sind.

11. Zusammensetzung nach einem der Ansprüche 8 bis 10, wobei das Alkylamin ausgewählt ist aus:
• einem Alkylmonoamin mit einer Fettkette mit 12 bis 24 Kohlenstoffatomen, vorzugsweise 12 bis 22 Kohlenstoffatomen; und
• einem Alkylpolyamin mit einer Fettkette mit 12 bis 24 Kohlenstoffatomen, vorzugsweise 12 bis 22 Kohlenstoffatomen.

12. Zusammensetzung nach einem der Ansprüche 8 bis 11, bei der es sich um ein bitumenhaltiges Bindemittel handelt, das bezogen auf die Gesamtmasse Bindemittel 0,1 bis 5 Gewichts-% modifiziertes Alkylphenol-Aldehyd-Harz umfasst.

13. Bitumenhaltiges Mischgut nach einem der Ansprüche 8 bis 11, das bezogen auf die Gesamtmasse Mischgut 1 bis 10 Gewichts-% bitumenhaltiges Bindemittel nach Anspruch 10 und 90 bis 99 Gewichts-% Zuschlagstoffe umfasst.

14. Asphalt nach einem der Ansprüche 8 bis 11, das bezogen auf die Gesamtmasse Asphalt 1 bis 20 Gewichts-% bitumenhaltiges Bindemittel nach Anspruch 10 und 80 bis 99 % Füllstoffe umfasst.

15. Verfahren zur Behandlung einer Rohölzusammensetzung oder eines Derivatprodukts einer Rohölzusammensetzung, die bzw. das Asphaltene umfasst, wobei dieses Verfahren mindestens Folgendes umfasst:
(i) Eintragen von mindestens einem modifizierten Alkylphenol-Aldehyd-Harz in die Rohölzusammensetzung oder in das Derivatprodukt einer Rohölzusammensetzung, die bzw. das Asphaltene umfasst,
(ii) einen Behandlungsschritt, ausgewählt aus: einer Druckerhöhung, einer Temperaturerhöhung, einem Vermischen mit mindestens einem weiteren Fluid,
wobei das modifizierte Alkylphenol-Aldehyd-Harz erhältlich ist durch Mannich-Reaktion eines Alkylphenol-Aldehyd-Kondensationsharzes
• mit mindestens einem Aldehyd und/oder einem Keton mit 1 bis 8 Kohlenstoffatomen, vorzugsweise 1 bis 4 Kohlenstoffatomen;
• und mindestens einer Kohlenwasserstoffverbindung mit mindestens einer Alkylamin-Gruppe, die zwischen 1 und 30 Kohlenstoffatome, vorzugsweise zwischen 4 und 30 Kohlenstoffatome, aufweist,
wobei das Alkylphenol-Aldehyd-Kondensationsharz selbst erhältlich ist durch Kondensation von:
• mindestens einem Alkylphenol, das durch mindestens eine geradkettige oder verzweigte Alkylgruppe mit 1 bis 30 Kohlenstoffatomen, vorzugsweise einem Monoalkylphenol, substituiert ist,
• mit mindestens einem Aldehyd und/oder einem Keton mit 1 bis 8 Kohlenstoffatomen, vorzugsweise 1 bis 4 Kohlenstoffatomen.

## Claims

1. Use of at least one modified alkylphenol-aldehyde resin in a crude oil composition or in a product derived from a crude oil composition and comprising asphaltenes, for dispersing asphaltenes and/or for preventing and/or retarding and/or inhibiting and/or reducing precipitation of asphaltenes, said modified alkylphenol-aldehyde resin being obtainable by Mannich reaction of an alkylphenol-aldehyde condensation resin
• with at least one aldehyde and/or ketone having from 1 to 8 carbon atoms, preferably from 1 to 4 carbon atoms;
• and at least one hydrocarbon compound having at least one alkylamine group, having between 1 and 30 carbon atoms, preferably between 4 and 30 carbon atoms,
said alkylphenol-aldehyde condensation resin being itself obtainable by condensation
• of at least one alkylphenol substituted by at least one linear or branched alkyl group having from 1 to 30 carbon atoms, preferably a monoalkylphenol,
• with at least one aldehyde and/or ketone having from 1 to 8 carbon atoms, preferably from 1 to 4 carbon atoms.

2. Use according to Claim 1, for implementation thereof in a crude oil composition or in a product derived from a crude oil composition and comprising asphaltenes subject to one or more of the following conditions:
• an increase in pressure,
• an increase in temperature,
• mixing with at least one other fluid.

3. Use according to either one of Claims 1 and 2, wherein the modified alkylphenol-aldehyde resin is obtainable from p-nonylphenol, formaldehyde and at least one hydrocarbon compound having at least one alkylmonoamine or alkylpolyamine group.

4. Use according to any one of Claims 1 to 3, wherein the modified alkylphenol-aldehyde resin is used in diluted form in a solvent, preferably in an aromatic solvent, or in an oil.

5. Use according to any one of Claims 1 to 4, in a crude oil composition or in a hydrocarbon fraction of crude oils comprising asphaltenes.

6. Use according to Claim 5, in a facility selected from: a tank, a refining plant, a pipeline, a wellbore, a transport facility, a filter.

7. Use according to any one of Claims 1 to 4, in a product derived from a crude oil composition selected from: bituminous binders, bituminous mixes and asphalts, for decreasing the preparation temperature and/or the service temperature of the bituminous binder, and/or for decreasing the manufacturing, service and/or compaction temperatures during preparation of a bituminous mix, and/or for decreasing the manufacturing and/or service temperatures during preparation of an asphalt.

8. Composition comprising asphaltenes, selected from:
bitumen compositions, bituminous binders, bituminous mixes and asphalts,
said composition comprising at least one modified alkylphenol-aldehyde resin obtainable by Mannich reaction of an alkylphenol-aldehyde condensation resin
• with at least one aldehyde and/or ketone having from 1 to 8 carbon atoms, preferably from 1 to 4 carbon atoms;
• and at least one hydrocarbon compound having at least one alkylamine group, having between 1 and 30 carbon atoms, preferably between 4 and 30 carbon atoms,
said alkylphenol-aldehyde condensation resin being itself obtainable by condensation
• of at least one alkylphenol substituted by at least one linear or branched alkyl group having from 1 to 30 carbon atoms, preferably a monoalkylphenol,
• with at least one aldehyde and/or ketone having from 1 to 8 carbon atoms, preferably from 1 to 4 carbon atoms.

9. Composition according to Claim 8, wherein the modified alkylphenol-aldehyde resin is obtained from at least one alkylmonoamine or at least one alkylpolyamine having at least one primary amine group.

10. Composition according to Claim 9, wherein the modified alkylphenol-aldehyde resin is obtained from at least one alkylmonoamine or at least one alkylpolyamine in which all the amine groups are primary amines.

11. Composition according to any one of Claims 8 to 10, wherein the alkylamine is selected from:
- a fatty-chain alkylmonoamine having from 12 to 24 carbon atoms, preferably from 12 to 22 carbon atoms, and
- a fatty-chain alkylpolyamine having from 12 to 24 carbon atoms, preferably from 12 to 22 carbon atoms.

12. Composition according to any one of Claims 8 to 11, which is a bituminous binder comprising from 0.1% to 5% by mass of modified alkylphenol-aldehyde resin, relative to the total mass of binder.

13. Bituminous mix according to any one of Claims 8 to 11, comprising from 1% to 10% by mass of bituminous binder according to Claim 10 and from 90% to 99% by mass of aggregates, relative to the total mass of the mix.

14. Asphalt according to any one of Claims 8 to 11, comprising from 1% to 20% by mass of bituminous binder according to Claim 10 and from 80% to 99% of fillers, based on the total mass of the asphalt.

15. Process for treating a crude oil composition or a product derived from a crude oil composition and comprising asphaltenes, this process comprising at least:
(i) the introduction of at least one modified alkylphenol-aldehyde resin into the crude oil composition or into the product derived from a crude oil composition and comprising asphaltenes,
(ii) a treatment step selected from: an increase in pressure, an increase in temperature, mixing with at least one other fluid,
said modified alkylphenol-aldehyde resin being obtainable by Mannich reaction of an alkylphenol-aldehyde condensation resin
• with at least one aldehyde and/or ketone having from 1 to 8 carbon atoms, preferably from 1 to 4 carbon atoms;
• and at least one hydrocarbon compound having at least one alkylamine group, having between 1 and 30 carbon atoms, preferably between 4 and 30 carbon atoms,
said alkylphenol-aldehyde condensation resin being itself obtainable by condensation
• of at least one alkylphenol substituted by at least one linear or branched alkyl group having from 1 to 30 carbon atoms, preferably a monoalkylphenol,
• with at least one aldehyde and/or ketone having from 1 to 8 carbon atoms, preferably from 1 to 4 carbon atoms.
